# EUROPEAN PATENT SPECIFICATION

(11) **EP 2 630 619 B1**
(45) Date of publication and mention of the grant of the patent: **13.11.2019**
(21) Application number: 11833906.8
(22) Date of filing: 12.01.2011
(51) Int. Cl.: G06K 19/07, G06K 19/077, G06K 7/10, G06F 12/14, G06F 21/35, G06F 21/83, G06F 21/84

(54) **DATA STORAGE ON A REMOTE-ACCESS APPARATUS**
DATENSPEICHERUNG AUF EINER VORRICHTUNG MIT FERNZUGRIFF
STOCKAGE DE DONNÉES SUR UN APPAREIL D'ACCÈS À DISTANCE

(30) Priority: 22.10.2010 WO PCT/FI2010/050836
(43) Date of publication of application: 28.08.2013
(73) Proprietor: Smartrac Investment B.V., 1077 XX Amsterdam (NL)
(72) Inventor: MANNINEN, Antti, FI-33100 Tampere (FI); VIRTANEN, Juhani, FI-33100 Tampere (FI); KOSKELAINEN, Tuomas, FI-33960 Pirkkala (FI)
(74) Representative: Berggren Oy, Tampere
(86) International application number: PCT/FI2011/050014
(87) International publication number: WO 2012/052602

(56) References cited:
- EP-A1- 1 909 218
- US-A1- 2007 132 588
- US-A1- 2007 132 588
- US-A1- 2008 129 447
- US-A1- 2010 134 257

## Description

### Field of the Invention

The present invention relates to remote-access apparatuses, especially to methods, devices, systems and computer programs for storing data on a remote-access apparatus and the remote-access apparatuses with such functionality.

### Background of the Invention

Modern logistics was to a great degree enabled by the development of the product code system and bar codes. Products and pallets could be quickly identified by reading a bar code with an optical reader, and the tracking of items in the logistic chain became feasible. Furthermore, the products could be counted and sold at the point of sale more quickly and more reliably. Beyond consumer product logistics, industrial material management systems, postal and courier services, healthcare and bio-analytics systems and many other fields of human activity have benefitted from the use of bar codes.

Over time, the needs of having various kinds of information available on a product outgrew the capabilities of a simple bar code. To this end, new technologies were developed, such as two-dimensional bar codes. Of such emerging technologies, radio frequency identification (RFID) has rather quickly become the technology of choice for identifying and tracking items. RFID technology has a vast number of applications making use of the ability to read an RFID tag from a distance even without a line-of-sight connection between the reader and the tag. RFID is quickly replacing or at least augmenting the bar code technology in many places.

The basic information that an RFID tag carried has traditionally been electronic product code (EPC) information and/or tag identification information. RFID tags with more capabilities may have the ability to store more information in the tag memory, and even carry out some simpler processing of data.

A radio frequency identification tag (RFID tag) typically comprises an RFID chip and an antenna connected to the chip, attached to or protected inside a plastic layer. The antenna and the chip together with supporting substrate layers are often referred to as a transponder. The RFID chip contains analog and/or digital processing circuitry, e.g. a state machine and/or a processor and memory for storing information, as well as circuitry for receiving radio frequency (RF) energy and modulating the RF wave. The chip is connected to the antenna, whose shape and size depend on the frequency at which the tag operates and the application for which the tag is used. The chip and the antenna are often laid inside a thin plastic container for protection. The tag as a whole is typically flexible to a certain degree, especially the passive tags that do not contain a power supply.

Passive tags, that is passive RFID transponders use the energy from the radio-frequency electromagnetic field of the read-out signal to power the operations that the tag carries out. Passive tags operate essentially while they are in the reader field, and are essentially inactive at other times. Therefore, the farther the reader device and the weaker the read-out signal, the less energy is available for the tag to use. This in turn means that the tag cannot perform very complex operations that would require a lot of power, since such tags could only be read from a very short distance away. In other words, the read-out distance of a tag is to a large extent determined by the power consumption requirements of the tag. Naturally, the attenuation and power distribution of the electromagnetic signal emitted by the tag is another concern. To tackle this issue, some passive tags have a battery that may be used to power the processing circuitry and thereby allow longer operating range for the tag. Such tags that use an internal power source to energize the response signal may be called semi-passive tags.

Some applications may necessitate more complex processing and/or more demanding properties of the RFID tag. It may become necessary to arrange more internal power such that these operations may be carried out. Some tags may require an internal power source to communicate with a longer range. Such tags may be called active tags. It may also be necessary to provide internal power so that operations can be carried out at times when the power from the external radio frequency electromagnetic field is not available. Usually this is arranged by means of a battery attached to the RFID tag. The battery may power sensors, memory, processors and/or a transmitter of the tag so that sensing, data logging and processing may be carried out at any time. Such more complex tags may be more complicated to manufacture, more expensive and/or more prone to malfunction than passive or semi-passive tags. Moreover, any tags with an internal power supply may have a limited lifetime, since they cannot be operated properly or at all when the battery runs out. Another practical problem is that when an active tag is taken into use, the battery operation needs to be activated. Otherwise, the battery would be in use e.g. already starting from manufacturing of the tag and prior to actual active use.

The patent application publication US 2007/0132588 A1 discloses a data storing apparatus and method for radio frequency identification (RFID) tags with sensors. On the tag, there is a data storage storing e.g. data measured through a sensor embedded in the RFID tag.

In order to carry out more complex operations with a tag, there may be a need to store more data on a tag. In addition, some of the data may need to be protected from unauthorized access. These requirements make the tag more complicated, and possibly make the tag consume more energy. This, in turn, has the drawbacks mentioned above.

There is, therefore, a need for solutions that facilitate the use of simpler tags for more complicated operations.

### Summary of the Invention

Now there has been invented an improved method and technical equipment implementing the method, by which the above problems are alleviated and that enable the use of simpler remote-access devices for more complex operations than before. Various aspects of the invention include methods, reader apparatuses, a systems, a remote-access devices and computer readable media comprising computer programs stored therein for carrying out the methods and operating the devices, which aspects are characterized by what is stated in the independent claims. Various embodiments of the invention are disclosed in the dependent claims.

The invention relates to providing application data on a device, for example on a remote-access device that is energetically essentially passive. The application data may be formed into a bit string and the bit string may be stored into a password memory space of the device, thereby saving memory space and possibly avoiding to add memory.

The invention is defined in the independent claims 1, 9 and 13.

At the same time, the password area may still be used as a password field, i.e. the bit string containing application data functions as a password. The password area may be protected from unauthorized access by an access password. For example, the password may be a password for inactivating the device and the access password may be for gaining access to the inactivation functionality of the device. In case the inactivating password is the kill password of an RFID tag, the kill password may be set to contain application data, but it may still function as the kill password. Nevertheless, in simple tags, the kill password may be this way used as memory, and since the kill password is protected from unauthorized use by an access password, the application data is protected from unauthorized access. The application data in the memory may be e.g. temperature calibration data or temperature history data.

According to a first aspect of the invention there is provided a method for retrieving application data in a remote-access device, said remote-access device being energetically essentially passive, the method comprising accessing a password area for obtaining a first password, deriving application data from said obtained first password, and providing said application data derived from said obtained password to be accessible to an application.

According to an embodiment, the method further comprises using a second password to gain access to said first password. According to an embodiment, said first password is a password for inactivating said remote-access device such as a kill password. According to an embodiment, said first password is a password for inactivating said remote-access device and said second password is an access password for gaining access to the inactivation functionality of the remote-access device. According to an embodiment, the method further comprises deriving advanced functionality data from said obtained first password, and using advanced functionality of said remote-access device by utilizing said advanced functionality data. According to an embodiment, the method further comprises deriving an address from said obtained first password, obtaining advanced functionality data using said derived address, and using advanced functionality of said remote-access device by utilizing said advanced functionality data. According to an embodiment, said advanced functionality is temperature measurement and said advanced functionality data is calibration information for said temperature measurement. According to an embodiment, accessing said first password is done according to a protocol of one of the group of UHF EPC Gen2, HF ISO 14443 and HF ISO 15693.

According to a second aspect of the invention, there is provided a method for providing application data on a remote-access device, said remote-access device being energetically essentially passive, the method comprising: forming application data into a bit string for storing into a password memory space of said remote-access device, obtaining write access to a password memory space of said remote-access device, and writing said application data bit string into said password memory space.

According to an embodiment, the method further comprises using an access password to obtain access to said password memory space. According to an embodiment, said password memory space is a password memory space reserved for an inactivating password for said remote-access device such as a kill password. According to an embodiment, the method further comprises forming an address or a pointer into said bit string, wherein said address or pointer is indicative of a physical or virtual location where a part or a whole of said application data resides. According to an embodiment, said application data is data related to a temperature measurement such as a calibration coefficient for temperature recording using a local oscillator of the remote-access device, or temperature history data of the remote-access device.

According to a third aspect of the invention, there is provided a remote-access device, said remote-access device being energetically essentially passive, comprising an antenna, circuitry for processing information and password memory, the password memory containing data indicative of application data.

According to an embodiment, the data indicative of application data is related to a temperature measurement such as a calibration coefficient for temperature recording using a local oscillator of the remote-access device, or temperature history data of the remote-access device. According to an embodiment, said device is arranged to provide access to said password memory when receiving an access password, and said password memory is reserved for an inactivation password such as a kill password for inactivating said device. According to an embodiment, the remote-access device comprises an address or a pointer in said password memory, wherein said address or pointer is indicative of a physical or virtual location where a part or a whole of said application data resides.

According to a fourth aspect, there is provided a reader device for reading remote-access devices, said remote-access devices being energetically essentially passive, said reader device comprising a processor and a memory comprising computer program code, said computer program code containing instructions that, when run on the processor, cause the reader device to access a password area of a remote-access device for obtaining a first password, derive application data from said obtained first password, and provide said application data derived from said obtained password to be accessible to an application.

According to an embodiment, the application data is related to a temperature measurement such as a calibration coefficient for temperature recording using a local oscillator of the remote-access device, or temperature history data of the remote-access device. According to an embodiment, the reader device is arranged to request access to said password memory by sending an access password, wherein said password memory is reserved for an inactivation password such as a kill password for inactivating said device. According to an embodiment, the reader device further comprises computer program code containing instructions that, when run on the processor, cause the reader device to derive an address from said obtained first password, obtain advanced functionality data using said derived address, and use advanced functionality of said remote-access device by utilizing said advanced functionality data.

According to a fifth aspect there is provided a remote-access device comprising processing means, memory means and communication means for carrying out the method according to the first aspect.

According to a sixth aspect there is provided a reader device comprising processing means, memory means and communication means for carrying out the method according to the first aspect.

According to a seventh aspect there is provided a system comprising one or more remote-access devices according to the third aspect, one or more reader devices according to the fourth aspect, one or more servers for storing application data, the system being configured to access a password area of said one or more remote-access devices for obtaining at least one first password, derive at least one address from said obtained at least one first password, obtain advanced functionality data from said one or more servers using said at least one derived address, and use advanced functionality of said one or more remote-access devices by utilizing said advanced functionality data.

### Description of the Drawings

In the following, various embodiments of the invention will be described in more detail with reference to the appended drawings, in which
- Figs. 1a and 1b: show block diagrams of an RFID tag and a reader device, respectively;
- Figs. 2a and 2b: show methods for reading data from a remote-access device according to an example embodiment;
- Figs. 3a and 3b: show methods for writing data to a remote-access device according to an example embodiment;
- Figs. 4a and 4b: show tags with application data stored in a password area, and with application data stored in a password area and protected by an access key;
- Fig. 5: shows a memory configuration of a tag according to an example embodiment;
- Fig. 6: shows a method for deriving application data from a password memory of a tag;
- Fig. 7: shows a reader device for employing application data in a password area;
- Fig. 8: shows a system for employing memory capabilities of tags with a number of tags, reader devices and networked computers according to the invention;
- Fig. 9: shows a system for manufacturing tags with application data stored in a password memory;
- Fig. 10: shows a method for manufacturing tags with application data stored in a password memory; and
- Fig. 11: shows temperature measurement arrangement as an illustration of utilizing memory capabilities of a tag.

### Detailed Description of the Embodiments

In the following, several embodiments of the invention will be described in the context of radio frequency identification (RFID) tags. It is to be noted, however, that the invention is not limited to RFID tags and systems only. In fact, the different embodiments have applications widely in any environment where advanced functionalities and memory capabilities of small devices with limited power supply are needed.

It has been noticed in the context of this invention that certain advanced applications of RFID tags would require active RFID tags (such tags that have a power supply), and that this would in turn make the tags more complicated and more expensive. Alternatively, straightforward implementation of advanced functionality on passive RFID tags would increase the power consumption of the tags and thereby reduce the effective reading range or operational range of the tag. Various embodiments of the invention are envisioned to be used with RFID tags that are energetically essentially passive, that is, with tags that operate essentially while being in the reader field and being able to draw energy from the field.

In various embodiments of the invention, some of the processing required by the advanced functionality of a passive RFID tag may be carried out in the reader device or elsewhere in the system. This makes it possible to reduce the power consumption of the RFID tag and for the tag to have an improved operational range. The invention may help to keep the tag electronics simple and thus usable in weaker reader fields and/or longer reading ranges. On the other hand the invention may also reduce need for powerful readers to compensate for the tag power consumption. The latter benefit may be significant in some environments with many readers in the same area and/or where interfering electromagnetic fields need to be kept to a minimum.

In the invention, it has been noticed that simple and passive tags and other devices may not be equipped with memory for storing data, for example for utilizing advanced functionality of a tag. In addition, it has been noticed that there may arise needs for protecting some of the data from unauthorized access, and that providing such mechanisms may be difficult to implement, energetically expensive (leading to disadvantages mentioned above), and/or such that they lead to solutions that are specific to a tag type or a tag manufacturer, thus making it more difficult to employ such tags more widely. All and any one of these problems have been identified in the context of this invention.

In various embodiments of the invention a surprising feature of some password memory fields of RFID tags and other devices is utilized. Namely, in some devices, a password field may be implemented for the sake of gaining access to some functionality, the password being a so-called shared secret, a signature, or derivable from known data by a secret algorithm. A finding in the invention is that once a password has been set in the memory, it may not be needed for anything else than comparing with an incoming password candidate. The password may therefore, surprisingly, be used to store application data, in other words, application data may be encoded into a password. Thereby the password may now serve two functions: operate as a password and carry application data for reading. This may be advantageous in devices that otherwise have little memory or have no tamper-proof memory (a password field may often be implemented in a tamper-proof manner). In addition, as a further surprising effect, some password fields may be protected by another password, and thereby such a field may serve as secure storage for application data. The above advantages may be present in any electronic device, and they may be especially advantageous in devices that are simple and energetically essentially passive.

Functionalities such as computing a measurement value and managing information security may be carried out in the reader or a network computer, and implementing such advanced functionality in a traditional manner could increase the power consumption of the tag significantly. A novel arrangement according to some embodiments therefore also makes it possible to implement advanced functionality to a passive tag. For example, a temperature measurement may be implemented using a passive RFID tag wherein some of the measurement processing is carried out at the reader or the rest of the system. The various embodiments also make it possible to implement storing advanced functionality codes and/or advanced functionality data into a password field, and the password field may be protected from unauthorized access by a further password.

In certain cases it has been noticed in the invention that it may be problematic if it is not known what operations the rest of the system is required to carry out. These operations may e.g. be such that they are not governed by any standard such as the UHF Gen 2 standard. An advanced functionality code has been invented to alleviate this problem. An advanced functionality code is a piece of information associated with the tag and communicated to the reader (or the rest of the system) so that the advanced functionality provided by the tag is then known. For example, an advanced functionality code may indicate that a passive tag provides an advanced functionality of a temperature measurement arranged so that part of the required processing is carried out at the reader device. The tag may send this advanced functionality code to the reader device, and the reader may then adjust its operation accordingly. As another example, the advanced functionality code may indicate an allowed condition for using or accessing the tag, for example by indicating who is allowed to used the tag, when the tag is allowed to be used, or a geographic range where the tag is allowed to be used. The advanced functionality code may be stored into a password field.

In certain other cases it has been noticed in the invention that carrying out an advanced functionality in a distributed manner between the tag and the rest of the system may require some additional data that is not easily available to the system. For example, such additional data may be advanced functionality data that can be used in carrying out the advanced functionality of the tag. The advanced functionality data may for example be information specific to the tag to enhance the advanced functionality, a mathematical formula, or an access key or access code, or any other data that are specific to the tag, specific to the advanced functionality, specific to the system or otherwise associated with the tag. The advanced functionality data may be carried on the tag in a memory, or it may be accessible to the system by means of identifying the tag and using the identifier as key to accessing the advanced functionality data. The advanced functionality data therefore enables the use of the advanced functionality of the tag, or improves the use of the advanced functionality. The advanced functionality data may be wholly or partly stored into a password field. For example, if part of the advanced functionality data is stored into a password field protected by an access password, using the advanced functionality may be prevented even though some advanced functionality data resides in a normal, accessible memory.

One or more password fields may be used for storing application data. Other memory than password memory may be used for storing application data. The password may contain the complete application data, or only a part of the application data. The password may contain one or more addresses from where the application data may be retrieved. The address may be e.g. a memory address or a memory identifier for accessing a certain location or a certain range of a memory. The address may be a pointer to a directory, a file name, identifier of blocks of data in a memory or in a data file. The address may point to another device, e.g. to a reader memory location. The address may be a hyperlink such as a hypertext link or an internet address. The address may comprise a part of a complete address, whereby the part of the address may be complemented with a stem or a range to make the address complete. For example, the address may be "tid12345678.doc" and to obtain a complete address, the address may be complemented by a stem "http://www.tagstore.com/data/" to obtain the internet address "http://www.tagstore.com/data/tid12345678.doc". The password may contain partial or complete application data and in addition a partial or a complete address where further application data may be found. The password may also contain an access key or information for deriving an access key or the password may be an access key to accessing the data at the address specified in the password. In this way, the password may contain application data, and some or all of the application data may be used as an access key to access data at an address specified in the access key. A part or a whole of the address data may also be used as an access key or may be used to derive an access key.

The advanced functionality code and the advanced functionality data may be stored on the chip or elsewhere on the tag either in easily accessible form or in protected form for example behind an access key or in encrypted form.

The embodiments of the invention provide advanced functionality for RFID tags and systems employing RFID tags, and a way for storing related information in an efficient and secure manner. The RFID tags and readers may operate according to a standard, and the advanced functionality code and advanced functionality data may be used to enhance the operations of passive RFID tags. For example, the RFID tag may carry in its memory the information necessary to carry out a function that goes beyond the standard. As an example, the determination of temperature may be considered, and the calibration information for the temperature measurement may be stored in the password memory of a tag. Further, temperature readings may be encoded into a password memory of a tag to store temperature history information on the tag.

For some applications it may suffice to use the advanced functionality code only, and advanced functionality data may not be required. For some other applications, the advanced functionality data may contain information that is necessary for the use of the advanced functionality, or the advanced functionality data may enhance the operation of the advanced functionality. The advanced functionality code AFC and the advanced functionality data AFD may for example be such that the AFC informs the reader that the tag is suitable for temperature measurement, and the AFD provides information to be used in the determination of the temperature. The AFC and/or the AFD may be stored wholly or partially in a password memory of the tag.

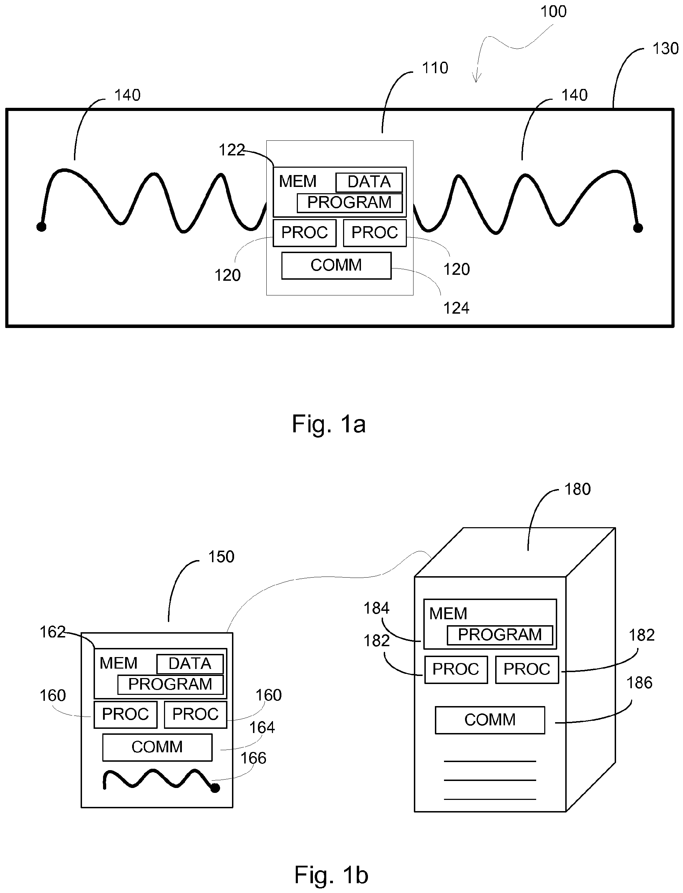

Figs. 1a and 1b show block diagrams of an RFID tag and a reader device, respectively. In Fig 1a, a passive RFID tag 100 according to an embodiment is shown. The tag comprises a chip 110, a protective surface 130 and an antenna 140. The antenna 140 is electrically coupled to the chip 110, and the chip and the antenna are formed inside the protective surface 130. The chip may comprise analog and digital (logic) circuitry to perform its operations, and/or it may comprise one, two or more processors 120, memory 122 as one, two or more memory sections and a communication module 124 such as a radio frequency modulation circuit coupled to the antenna 140. The program and/or logic may be in the form of microcode for a processor, a gate arrangement and/or programmable logic. There may be an oscillator for determining an operating frequency for the processor.

The memory 122 may comprise executable instructions for the processor, data and information related to the operation of the tag such as en electronic product code, tag identification, check sum, passwords like an access password for accessing the tag, and user data. Some of the memory may be read-only memory, and some of the memory may be writable. The memory may be write-once memory, whereby it is programmed in an early phase in the life span of a tag, or it may be write-protected by an access password. The memory may contain an access password for verifying access rights to some functionality or to a memory area. For example, an access password may be residing in the memory, and by sending the access password to the device, access is granted to a memory area. The memory area may then contain a kill password, and sending the kill password as a parameter or argument in a "kill" command or a "destroy" command makes the tag turn inactive, i.e. kills the tag. In the invention, it has been noticed that it application data may be, surprisingly, stored into the kill password area, since reading the kill password area may not kill the tag.

The memory may contain an advanced functionality code and advanced functionality data for using advanced functionality of the tag. The advanced functionality code may indicate the advanced functionality that the tag is capable of. Likewise, the advanced functionality data may be data that can be used in employing the advanced functionality of a tag. The memory may also contain application data. The protective surface 130 may be made of plastic, paper or any other suitable material, preferably material that is flexible. The material may be electrically and magnetically non-conducting in order not to obstruct the operation of the antenna 140, or the material may be weakly conducting or conducting. The tag contains no battery for powering the processor. The basic operation of the tag is to extract energy from a reader signal, and to respond to the reader signal. This responding may happen by employing back-scatter modulation of the radio frequency field (e.g. for UHF tags), or by varying the load imposed by the tag on the magnetic field (e.g. for HF tags). Typically, the tag may send an electronic product code (EPC) and/or a tag identifier (TID), or an universal identifier (UID) code, EAN code, or any serial number as a response.

An RFID tag or a device may operate according to a standard. For example, the air interface may be standardized to enable interoperability of tags and reader devices. The air interface may operate according to an UHF standard wherein the tag utilizes back-scattering modulation in communication. The air interface may operate according to an HF standard wherein the tag utilizes load variation in the magnetic field. The various pieces of information stored in the tag and sent by the tag such as the EPC code may be standardized e.g. according to a Gen2 standard. The tag and/or a reader device may be standardized as a whole. The access password and/or the kill password may be determined by an EPC Gen2 standard, or they may be determined by another standard, or they may be non-standard or customized password fields.

The remote-access device or a tag may have various forms. For example, the tag may comprise an inlay placed inside plastic protective layers, or inside paper or cardboard. The remote-access device may also be a tag embedded in an object, e.g. a tag inside a food package. The remote-access device may also be any object capable of operating according to the various embodiments and being otherwise energetically essentially passive. For example, the remote-access device may be a food package, container, box, barrel, pallet, vehicle or a piece of furniture like a shelf. It also needs to be understood that a remote-access device can be without definite form or it may not be an end-product. For example, a chip for an RFID device, or the combination of a chip and an antenna may form a remote-access device in an embodiment of this invention.

Fig. 1b shows an RFID reader device 150 according to an embodiment for reading information from tags. The reader device 150 comprises digital and analog circuitry for communicating with RFID tags. The reader device may comprise one, two or more processors 160, memory 162 as one, two or more memory sections and a communication module 164 such as a radio frequency modulation circuit coupled to an antenna 166. The memory 162 may comprise executable program code for the processor 160, and some of the program code and other means may be for utilizing an advanced functionality of an RFID tag based on an advanced functionality code and utilizing advanced functionality data to obtain an advanced functionality result. The memory 162 may also comprise program code for any application, and program code for reading/writing application data from/to the tag. The reader device 150 may be operatively connected (e.g. by means of a computer network, a fixed data connection or a wireless connection) to a computer or server 180. The computer or server 180 may comprise one or more processors 182, memory 184 and communication means 186 for communicating with computers and reader devices. The server 180 may comprise database functionality for storing information collected from tags through reader devices, and/or it may comprise means for utilizing the advanced functionality of a tag, e.g. by processing information received by the reader device and computing or otherwise obtaining an advanced functionality result. The server 180 may be networked with other servers, and the server 180 may alone or together with other servers provide a network service for utilizing the advanced functionality of RFID tags.

To indicate its capability to perform advanced functionality, the tag may sends an advanced functionality code AFC to the reader device. This sending may be in response to a request, or it may be spontaneous and in addition to standard operation. The sending of the AFC may happen anywhere during employing the advanced functionality, e.g. before the operation, during the operation or as a last step. The RFID tag sends the advanced functionality code to the reader device and/or the rest of the system so that it may be determined that the tag is capable or suitable for providing advanced functionality. The RFID tag may receive a request from the reader device to send information according to the advanced functionality indicated by the AFC. Alternatively or in addition, the tag may assume a mode of operation based on sending the AFC so that it will next send information needed for employing the advanced functionality. The tag may send advanced functionality information according to the advanced functionality code AFC. This information may be such that the reader device may determine an advanced functionality result using the information e.g. in computations or by complementing the information with other data. For example, the tag may send information that is useful in determining the temperature of the tag, whereas the tag alone may be unable to determine its temperature (since it may not have a sensor and a power supply to enable this). The tag may also send information it receives from another device e.g. via a wired or wireless connection. This may enable the tag to operate as a relay station or as a transceiver (receiver-transmitter) and provide another device with an RFID communication channel. The sending of information may happen in a plurality of steps, for example as responses to a plurality of requests from the reader.

The advanced functionality code AFC sent by the tag may be a code stored in the user data area and accessed by the tag when it needs to be sent. Alternatively, the AFC may be part of another code, such as the electronic product code (EPC) or the tag identifier, or an access password, or any other piece of information stored on the tag. The AFC may be a number, a series of characters and numbers, or a bit sequence. The AFC may comprise multiple non-contiguous parts. The AFC enables the reader device and/or the system beyond the reader device to determine that the tag provides an advanced functionality. The tag may have specific physical or programmatic means for providing this functionality, or the tag may be a regular tag that has been determined to be suitable for use in employing the advanced functionality. The advanced functionality code may indicate that the tag is allowed to be used for the specific functionality, e.g. the tag may be approved or licensed by the manufacturer for use with this functionality. The presence and use of the AFC may indicate that the tag is able to perform the advanced functionality with certain accuracy. In addition, the AFC may indicate that the tag carries additional information such as advanced functionality data for using the advanced functionality. The advanced functionality code may also indicate the configuration of the tag, e.g. to indicate whether the tag is able to store advanced functionality results and/or whether some of the data on the tag is stored in a protected form. For example, an AFC for temperature measurement may indicate that the tag contains data for the temperature determination, that this data is in protected form, and the tag is able to store temperature values determined by the reader. There may also be more than one advanced functionalities provided by a tag, associated with one or more advanced functionality codes.

The reader device may request the RFID tag to send any advanced functionality code it has. This request may be a separate request or it may be a request according to a standard, whereby the tag interprets a standard request to mean that it should send the AFC. The reader device may then receive an advanced functionality code and determine that the tag is capable of providing the advanced functionality. Based on receiving the AFC, and/or based on other knowledge, the reader device then requests information from the tag, wherein the information is needed for using the advanced functionality. This information may be regular information provided by the tag according to a standard, or it may be additional information. The requesting may happen in a plurality of steps, or in one step. When the reader has received the information, it may then use the information to utilize the advanced functionality according to the AFC. For example, the reader may determine the temperature of a tag from timing responses of a tag by carrying out computations based on the response and/or accessing data tables. The reader may also improve the use of the information by utilizing other data indicated by the AFC. For example, the reader may use a key to access information stored on the tag for the temperature calculation.

The methods carried out by the RFID tag and the reader device may be interlinked so that some the method steps of the RFID tag happen in response to the method steps of the RFID reader device and vice versa.

As described earlier, the tag may send information for utilizing an advanced capability according to an advanced capability code AFC. The sending of the information may also happen without any advanced capability code. The tag sends information related to an advanced capability, possibly as a response to a request from a reader. Related to the use of advanced functionality, the tag may carry additional data for using the advanced functionality. For example, the tag may comprise data for a temperature measurement or another type of measurement, or the tag may contain a section of data that can be utilized in using the advanced capability. The tag may fetch the AFD from a memory either internal to the chip or in some other manner operatively connected to the tag. The tag then sends this advanced functionality data AFD to the reader device so that the AFD can be used or stored at the reader device and/or one or more other devices in the system for utilizing the advanced functionality.

The advanced functionality data AFD may be a data table or a data structure, functionality parameters, a definition of a mathematical function or any other data structure or object that may be used in utilizing the advanced functionality. For example, the AFD may comprise a single number, a series of numbers, a data table, a plurality of data tables, a data structure, an object definition and data, a database, and/or any combination of these alone or together with other information. The AFD may comprise a single packet of data, or the AFD may be distributed across a plurality of packets. The AFD may be complete and usable as such, or it may be such that it is augmented by other data and/or code that resides elsewhere in the system to save memory on the tag. The AFD may be intended to be used in the advanced functionality, or it may be intended for presenting the result of an advanced functionality (such as HTML code or XML representation, or a Adobe PDF file, Word document or Excel worksheet).

As described earlier, the reader device may request information relating to the advanced functionality, and receive the information. This information may be received at any time during the employing of the advanced functionality, e.g. before, during or after any receiving of advanced functionality data. The reader may then, with respect to an AFC and/or based on other knowledge, request advanced functionality data from the RFID tag. The tag may also send the data on its own so that a request is not needed. The reader device then receives the AFD and utilizes the AFD with the received information to e.g. obtain an advanced functionality result. The use of the AFD may happen at the reader device and/or elsewhere in the system. The AFD may be in protected form, whereby the reader device may form and/or use a key to access or decrypt the AFD before using it.

The tag may send information relating to an advanced functionality so that a reader device can use this information to utilize the advanced functionality of the tag. An advanced functionality result may be derived by the reader and/or the rest of the system. The tag may then receive the advanced functionality result alone or together with other data from the reader or from another device. The tag may store this advanced functionality result into a memory together with earlier received advanced functionality results, with other data and/or alone. The tag may store the result as such or the tag may process the result or combine it with other data before storing the result. The tag may even form advanced functionality data AFD by using the received result. The tag may store the received data and/or result in a protected or unprotected form, e.g. by using an access password and/or encryption methods. There may be other information received and stored by the tag, too, such as time and location information. The tag may also send advanced functionality data to the reader. For example, the tag may receive the temperature determination result from the reader and store it onto its memory in protected form behind a password or in encrypted form.

The reader may receive information from the tag related to advanced functionality, as explained above, possibly with advanced functionality data AFD. The reader device and/or the rest of the system may then determine an advanced functionality result, as explained earlier. The reader device and/or another device in the system may then choose to send the result back to the tag so that it can be stored on the tag in addition to or instead of storing it in the reader or in a database in the rest of the system. For example, the reader may send the result of a temperature computation to the tag so that the tag can store the temperature information at the tag. The reader may send other information than the result to the tag, too, for example location information and/or time information. This may allow the tag to e.g. store a temperature history with time and place of the item whose temperature is being monitored. This may be especially useful e.g. in cold chain management of perishable items or other temperature managed chains, where knowledge and control of the temperature history of an item is of importance.

The advanced functionality data may be in a protected form in either the tag memory, in the reader memory or in an external database. The protection may have been carried out so that the AFD resides in a memory area protected with an access key, or so that the AFD has been encrypted or scrambled using an algorithm dependent on an access key. The AFD may be wholly or partly stored in a password field of the tag, and the rest of the AFD may reside in normal memory on the tag, or in the reader, or in an external database. As described earlier, the password memory may contain an address or a pointer to application data.

The access key may be stored on the tag memory or a seed for generating the access key may be stored on the tag memory. An algorithm may be used to generate the access key from the access key seed, wherein the algorithm is such that it is unlikely that two different algorithms would produce the same exact access key. Moreover, it may be desirable that the algorithm is such that two different seeds are unlikely to produce the same access key.

The seed or the access key may be a value stored on the tag, for example the electronic product code or part of it, the tag identification or part of it, or another unique identifier or a combination of these or any parts of these. As an example, the access key may be an EPC (electronic product code) Class I Gen2 compliant access key for accessing locked memory areas of the tag. The EPC access key may be calculated from the EPC on the tag e.g. with a hash function, an XOR function with a mask, as a digital digest or another cryptographic key. The EPC may also be used as an index to a table of access keys e.g. cryptographic keys. The length of the key may be less than the length of the seed, it may be the same length or it may be longer. For example, the EPC may be 96 to 240 bits long, and the access key may be 32 bits long. Bit puncturing may be used in shortening the key and bit padding may be used to lengthen the key. A memory area containing data for the advanced functionality, e.g. the AFD, may be locked using the access key and can only be opened using the access key formed from the EPC or another seed. For example, the AFD may be stored in a kill password of a tag, protected by an access password. The locking and opening or encryption and decryption may be done in a symmetric manner wherein the encryption and decryption keys are the same, or it may be done in asymmetric manner, where the keys are different. A public key infrastructure (PKI) may be used for the latter. Every tag in the system may have a different access key (if the EPC or other seed on the tag is different), and the reader or the system can calculate the access key using the seed from the tag. Using this access key, the reader or the system can access or decrypt the AFD located on the tag or in an external database.

As an example, temperature calculation may happen so that the reader requests information from the tag that it can use for temperature measurement, and in order to achieve a result, it uses data stored on the tag in the measurement. The reader may have determined by using an AFC that the tag is suitable for temperature measurement. The advanced functionality code AFC may be part of the electronic product code indicating, for example, that the item is a perishable product and therefore its temperature needs to be monitored. The AFD may be data for calculating or determining the temperature of the tag from local oscillator frequency shift polled from the tag. The reader may request the data from the tag, and the data may reside on the tag in protected form, e.g. on a protected memory area or in encrypted form. The reader therefore uses an algorithm to obtain an access key based on the EPC or tag identification, and then unprotects the data using this access key. The unprotecting may happen e.g. by opening a protected memory area on the tag or by decrypting the data. The unprotected data, for example calibration information, may then be used for calculating the tag temperature. The access key may also be used to write data onto the tag in protected form, e.g. in a protected memory area or in encrypted form.

The protection algorithm may be a secret algorithm known only to the reader device or the system, or it may be a widely public algorithm. The algorithm may depend on the advanced functionality code. The data protected on the tag may be advanced functionality data or it may be any other data.

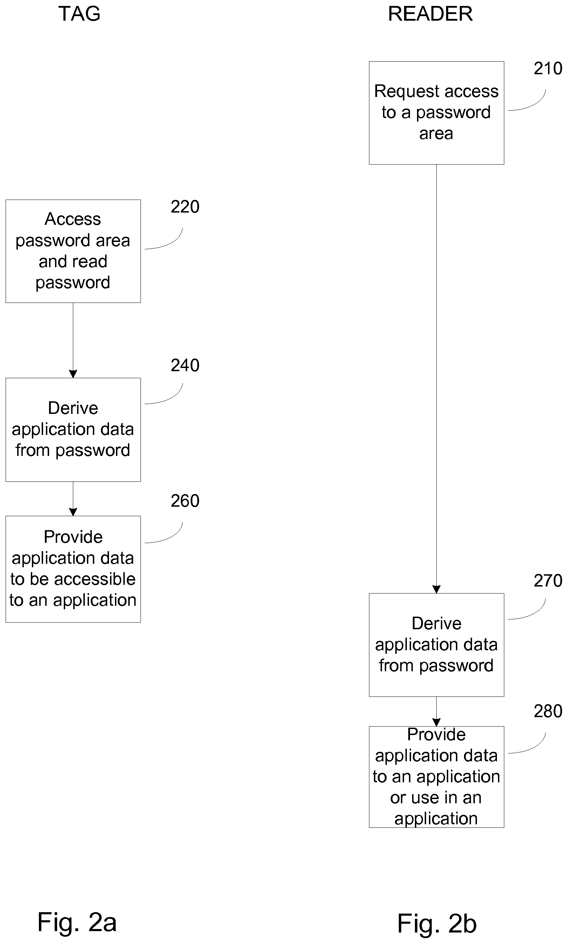

Figs. 2a and 2b show methods for reading data from a remote-access device (such as an RFID tag, or another electronic device, or a device where RFID functionality exists) according to an example embodiment. In Fig. 2a, access to read a password may first be granted in phase 220. This access may be granted on the basis of the device receiving an access password or an appropriate message to grant access to a password field. Alternatively, the access may be granted by default, e.g. so that the password field is readable to anyone attempting to read it with the correct command. Therefore, there may not be an access grant step at all. In phase 220, the password is read from the password memory. There may be a specific command for the reading received by the tag. For example, the remote-access device such as an RFID tag may receive an access request together with an access password. The RFID tag may then grant access to read a kill password (a password that can be used to inactivate the tag by sending the password as a parameter or argument in a "kill" command or a "destroy" command to the tag). The kill password may then be read and transmitted back to the reading device requesting the data. The operation described above may happen according to a standard, such as the UHF EPC Gen2 standard for RFID tags.

In step 240, a bit string of the password (whole or part of the password) read in phase 220 may be converted to a number or to a text, i.e. data suitable for use in an application. For example, the data may undergo type conversion, whereby a bit string is converted or interpreted as a certain data type, such as a floating point number (e.g. 16, 32 or 64 bits), an integer (e.g. 8, 16 or 32 bits), a character (e.g. 8 or 16 bits), or a logical TRUE/FALSE flag (e.g. 1 bit). Alternatively or in addition, a password bit string (whole or part of the password) may be mapped to a value using a data table or a function. Alternatively or in addition, the data in the bit string may be decoded or decrypted in another manner, e.g. by applying an XOR operation with another string before or after conversion, or by decrypting the string with a decryption key. The data may be converted to a data structure or an object, or used in a program. For example, the data may be converted to calibration coefficients for calibrating a temperature measurement carried out with the help of the remote-access device. In phase 260, the data formed in step 240, or the whole or part of the password read in phase 220 may be provided to be accessible to an application e.g. by storing it in a freely accessible memory or by transmitting it to another device such as a reader device for reading RFID tags. The above phases may be carried out in another manner than described, for example, a password field may be read with a single command.

Fig. 2b shows a method for reading data from a remote-access device such as a tag by using a reading device. In phase 210, the reading device may send a request to access a password area, e.g. by sending an access password and/or an appropriate message to the remote-access device. The reading device may also send a message to request the data in the password area, or the request may be in the same message as the access request, or an access request may at the same time be a request to read the data in the password area. The remote-access device may then perform actions, e.g. those described in the context of Fig. 2a, to provide the password data. The password data or data derived from the password data may be received at phase 270.

At phase 270, a bit string of the received password data (whole or part of the password) may be converted to a number or to a text, i.e. data suitable for use in an application. For example, the data may undergo type conversion, whereby a bit string is converted or interpreted as a certain data type, such as a floating point number (e.g. 16, 32 or 64 bits), an integer (e.g. 8, 16 or 32 bits), a character (e.g. 8 or 16 bits), or a logical TRUE/FALSE flag (e.g. 1 bit). Alternatively or in addition, a password bit string (whole or part of the password) may be mapped to a value using a data table or a function. Alternatively or in addition, the data in the bit string may be decoded or decrypted in another manner, e.g. by applying an XOR operation with another string before or after conversion, or by decrypting the string with a decryption key. The data may be converted to a data structure or an object, or used in a program. For example, the data may be converted to calibration coefficients for calibrating a temperature measurement carried out with the help of the remote-access device. As described earlier, the password data may contain an address or a pointer to application data, and phase 270 may consequently comprise accessing the application data from the address indicated in the password data.

At phase 280, the data may be provided to an application or used in the operation of an application. For example, as described elsewhere in this application, the reading device may utilize advanced functionality of a remote-access device (such as a passive RFID tag), and may e.g. determine local oscillator information from the tag for calculating a temperature of the tag. The reading device may use data received from a password field such as the kill password of a tag to improve the advanced functionality, e.g. calibrate the temperature measurement. For example, the received data may be used as coefficients in a conversion function from local oscillator information to a temperature. The data may be utilized in the reading device, and may be supplemented by data from elsewhere than the remote-access tag, or the data may be utilized in another device, e.g. a network server.

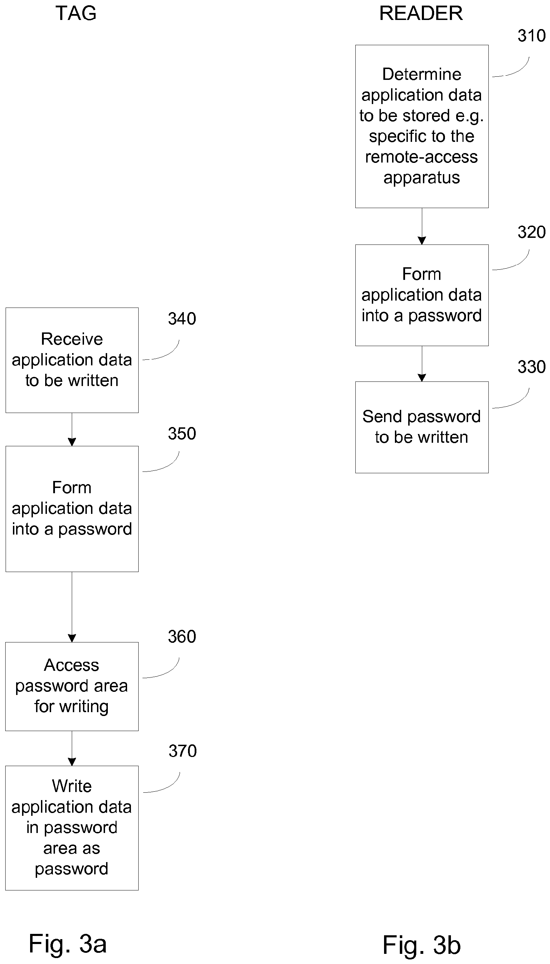

Figs. 3a and 3b show methods for writing data to a remote-access device according to an example embodiment. In Fig. 3a, the remote-access device receives application data in phase 340 to be written to a password area. The received application data may be numbers, text, logical data, structured data or other, or the application data may be already formed into a format suitable for storing into a password field. The data may be converted to be suitable for storing into a password field in phase 350, e.g. by packing, type conversion, mapping into discrete elements in a data table, or by another encoding, and possibly encrypted. For example, two 16-bit floating-point numbers may be received and their bit strings may be concatenated for storing into a 32-bit password field like the kill password. As described earlier, the password data may contain an address or a pointer to application data, and phase 350 may consequently comprise storing the application data to the address and converting the address to be in a suitable format for storing into the password area.

The storing of the application data in password format into a password field may require an access to be granted for the operation. For example, an access password may be received, and used for granting access to write into a password field such as the kill password field. Granting access for writing into a password area may happen in phase 360. In phase 370, the received and/or converted application data is written into a password field. For example, calibration coefficients for temperature measurement may be stored into a kill password of a tag that is capable of being used for temperature measurement. The password functionality of the application data may still be in operation although the stored data in the password field is now application data. For example, a tag may still be deactivated by sending the kill password (containing application data) as a parameter or argument for a "kill" command or a "destroy" command (together or separately from the command) to the RFID tag.

In Fig. 3b, the storing of application data by a reading device into a remote-access device password field is shown. In phase 310, the application data to be stored is determined. For example, the application data may be data specific to the remote-access device such that it is advantageous to carry it on the remote-access device. The application data may be an advanced functionality code or advanced functionality data, or part of the same, such as temperature capability code and/or calibration data for the temperature measurement, and/or temperature history of the tag. In addition, any other data such as location data, reading device identification, or data to be used in any application may be used here.

In phase 320, the application data may be formed into a password format for writing into a password field. The data may be concatenated and thereby formed into a bit string. The data may also be converted to be suitable for storing into a password field in phase 350, e.g. by packing, type conversion, mapping into discrete elements in a data table, or by another encoding, and possibly encrypted. For example, two 16-bit floating-point numbers may be received and their bit strings may be concatenated for storing into a 32-bit password field like the kill password. In phase 330, the formed password may then be sent to be written to the remote-access device, accompanied by appropriate protocol commands. In addition, an access request and/or an access password may be sent to gain access to writing into a password field. For example, an access password may be sent to gain access to writing into a kill password field on an RFID tag.

In Figs. 2 and 3, the advanced capabilities of a tag with advanced capability code and advanced capability information may be carried on the tag in a protected form. The tag may send advanced functionality data AFD to the reader in protected form. The AFD may, in other words, be in encrypted or in scrambled form. The reader may then receive and store the AFD. The tag may send key information to the reader device and/or the rest of the system. It is possible that this tag key information is the EPC or the tag identifier and the seed or actual key information resides in a database in the system. The reader and/or another element in the system may received this key information. Using this key information, the reader or another element in the system may form an access key. This access key may then be used to unprotect or decrypt the received data, or to unprotect or decrypt other data related to the tag. The above phases may happen in the tag and at the reader or rest of the system in an independent manner or dependent from each other. The different phases may happen in another order than described here.

Alternatively, the tag may send key information to the reader device and/or the rest of the system. It is possible that this tag key information is the EPC or the tag identifier and the seed or actual key information resides in a database in the system. The reader and/or another element in the system may receive this key information. Using this key information, the reader or another element in the system may form an access key and send it to the tag. The tag may receive the access key and use it to unprotect or decrypt advanced functionality data AFD residing on the tag. The tag may then send the unprotected AFD to the reader. The reader may then receive the AFD and use it to utilize the advanced functionality. The tag may unprotect and send other data than AFD using the access key. The above phases may happen in the tag and at the reader or rest of the system in an independent manner or dependent from each other. The different phases may happen in another order than described here.

Alternatively, the reader may request advanced functionality data AFD or other data from the tag. The tag may fetch key information (e.g. EPC) from memory, and form an access key using the key information. The tag may then unprotect advanced functionality data AFD residing in the tag memory by accessing a password-protected memory area or by decrypting the AFD. The tag may then send the unprotected AFD to the reader device. The reader may receive the AFD and use it to utilize the advanced functionality provided by the tag. The above phases may happen in the tag and at the reader or rest of the system in an independent manner or dependent from each other. The different phases may happen in another order than described here.

In the methods according to Figs. 2 and 3, there may be other steps than the ones shown in the figures and described above. For example, the advanced functionality code and its use and the storing of the advanced functionality result have been omitted.

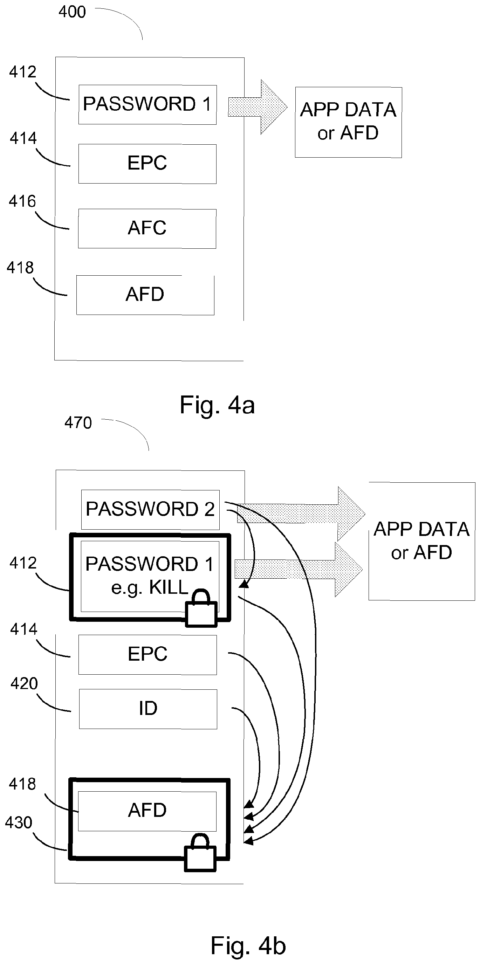

Figs. 4a and 4b show tags with application data stored in a password area, and with application data stored in a password area and protected by an access key. In Fig. 4a, a tag 400 or any other electronic device with application data stored in a password area is shown. The tag may comprise elements as described in the context of Fig. 1a, and has a memory for holding various pieces of information. There may be a password area 412 for storing a password, and for storing application data converted into a suitable form and for storing as a password, a memory 414 for the electronic product code and a memory 416 for the advanced functionality code AFC and a memory 418 for advanced functionality data AFD. The various memory areas may be implemented in the same memory, or they may be implemented in different memories. Some of the memory may be read-only memory, or write-once memory, or protected from unauthorized access in some way. In other words, the device (or tag) 400 is such that it contains application data in a password memory area (an area reserved for storing a password).

In Fig. 4b, a tag 470 with application data in a password area is shown. The tag comprises elements as described in the context of Fig. 1a, and has a memory for holding various pieces of information. There may be a password area 412 for storing a password and application data in/as the password, a memory 414 for the electronic product code and a memory 618 for advanced capability data AFD. The password area 412 PASSWORD 1 may be protected from read and/or write access by another password PASSWORD 2, e.g. an access password. One or both of the PASSWORD 1 and PASSWORD 2 may contain data indicative of application data, or application data as such. The application data may be extracted/decoded from the PASSWORD 1 and/or PASSWORD 2 fields by a separate operation, or by a simple type conversion. The various memory areas may be implemented in the same memory, or they may be implemented in different memories. Some of the memory may be read-only memory, or write-once memory, or protected from unauthorized access in some way. The tag may also comprise a tag ID or other identification information. The data area 418 has been arranged to be such that the AFD is stored in protected form, for example in a password-protected or encrypted memory 430. The memory 430 may be protected e.g. by encryption using as a password or encryption key or a seed for a password or encryption key at least part of one or more of the data in the ID field 420, the EPC field 418, the PASSWORD 1 area 412 (e.g. KILL password) or the PASSWORD 2 area. A tag may combine any or all functionalities as explained in the context of Figs. 4a and 4b.

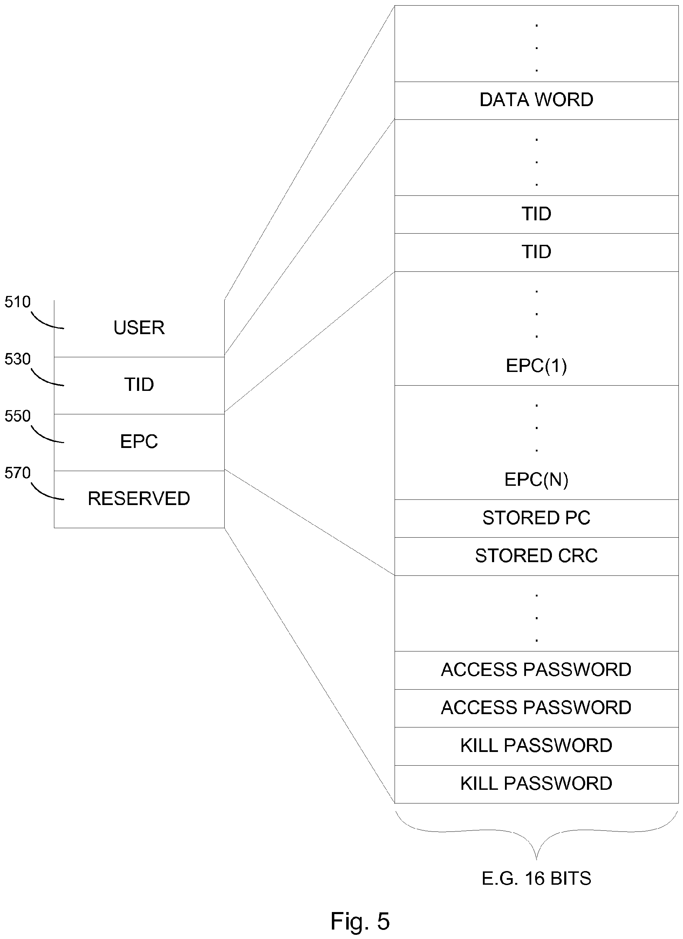

Fig. 5 shows a memory configuration of a tag according to an example embodiment. The tag may contain a contiguous memory space, or the memory space may be split into a plurality of contiguous memory spaces, or the memory may comprise permanent registers for storing individual data items. For example, the memory may comprise sections for user data USER 510, for tag identification data TID 530, for electronic product code data and related data EPC 550, and for other data such as passwords RESERVED 570. The various sections may comprise data items e.g. as follows. The user data area 510 may comprise a number of data words. The data words may be e.g. 8 bits, 16 bits, 32 bits or 64 bits long, or even 12 bits, 30 bits or another irregular length. The tag identification may comprise one or more tag identifiers. The tag identifier TID may be stored e.g. in one 16-bit data word, or in two 16-bit data words (being 32 bits in length). The electronic product code EPC may comprise a number of parts EPC(1)-EPC(N), and/or there may be a number of EPC codes stored on a tag. In addition, there may be a STORED PC value and a STORED CRC value in the memory for verifying the contents of the EPC memory area. In the RESERVED memory area 570 there may be various passwords stored such as an access password for accessing some memory areas like the kill password, and the kill password needed for inactivating a tag.

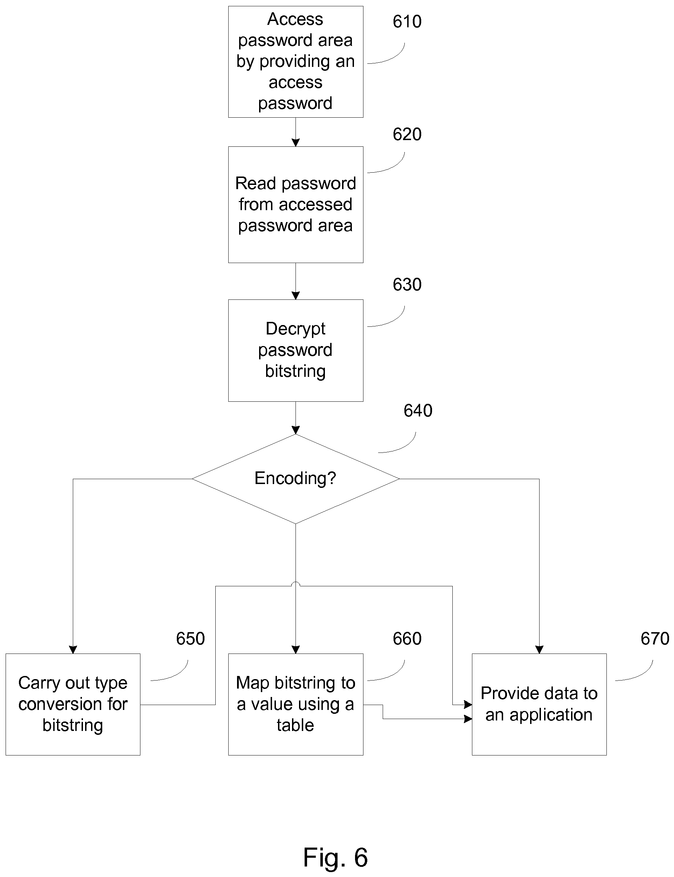

Fig. 6 shows a method for deriving application data from a password memory of a tag. In phase 610, a password area may be accessed e.g. by providing an access password (the access password being different from the password being accessed), as described earlier. In phase 620, password data may be read from the accessed password area. In case the password bit string is in encrypted form, the password bit string may be decrypted in phase 630 before decoding. The decryption may happen using data on the remote-access device or on the reading device or data from a server, e.g. by applying an XOR operation with another string before or after decoding, or by decrypting the string with a decryption key. In phase 640, the decision of employing zero, one or more decoding methods to the password bit string or a part of the password bit string is made.

In phase 650, in case the bit string or part of it is in an appropriate format, it may be converted to application data by simple interpretation or type conversion. For example, if there are 16 bits in the password bit string that represent a 16-bit floating point number, the 16 bits of the bit string may be converted to or interpreted as a floating point number, such as "+1.27°C" indicating a temperature or a calibration coefficient for calculating a temperature. As another example, an string of 7 or 8 bits may be interpreted as a character such as a "T", serving as an advanced functionality code for temperature measurements. In phase 660, a bit string may be mapped to a value using a table. For example, two bits of the bit string may form bit patterns "00", "01", "10" and "11", and these can be mapped to values like "-5°C", "-2°C", "+1 °C" and "+3°C", for example indicating a past temperature reading of a tag, or a calibration coefficient for calculating a temperature. The decoding methods may be combined, e.g. type conversion and mapping may be applied in sequence. In phase 670, the data may be provided to an application by storing them in a memory, by providing them to be accessible over an interface, or by sending them to another device. As described earlier, the password data may contain an address or a pointer to application data, and phase 670 may consequently comprise accessing the application data from the address indicated in the password data.

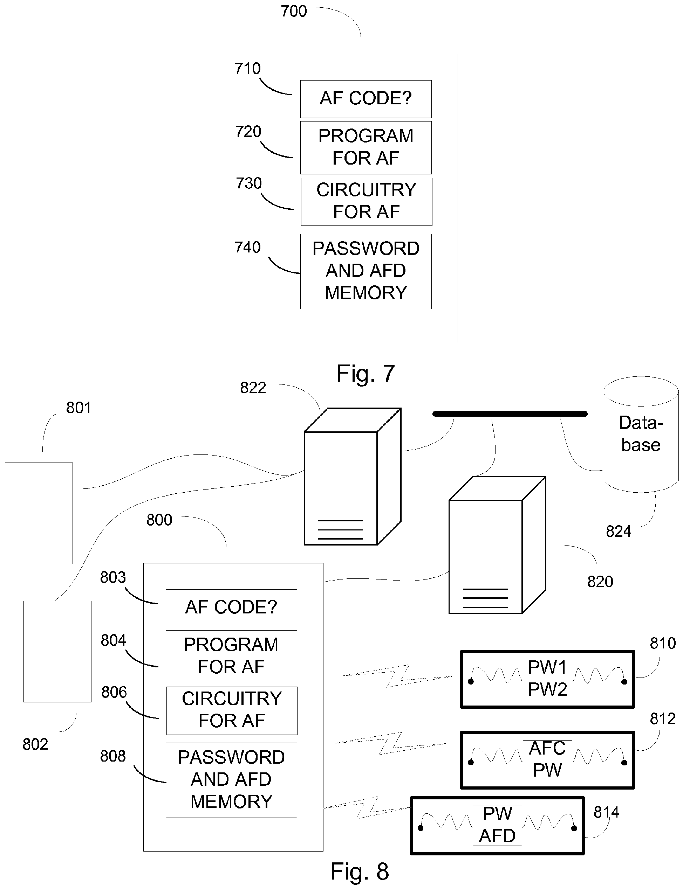

Fig. 7 shows a reader device 700 for employing application data in a password area. The reader may comprise elements as described in the context of Fig. 1b, and has a memory for holding various pieces of information. The reader device may contain a block 710 for determining through the use of an advanced functionality code whether a tag is capable of an advanced functionality. The reader device may also contain a program 720 for utilizing advanced functionality. The reader device may implement all or some of the advanced functionality operations as circuitry 730, e.g. to increase speed. The reader device may also contain memory 740 for holding advanced functionality data AFD received from an RFID tag. The memory 740 may also contain password information for accessing functionality and/or memory of a tag. For example, the memory 740 may contain an access password for accessing the kill password area of a tag. The memory 740 may also contain some or all of advanced functionality data AFD for using advanced functionality of a tag. For example, the memory may comprise temperature calibration information of a tag, whereby the tag contains a part of the temperature calibration information in a protected memory, e.g. the kill password memory area. The AFD, e.g. the calibration information, on the tag and on the reader may then be combined to use the advanced functionality of the tag, e.g. to determine temperature of the tag. Furthermore, the reader device may comprise functionality for determining time and location information so that it can be associated with the advanced functionality results.

Fig. 8 shows a system for employing memory capabilities of tags with a number of tags, reader devices and networked computers according to the invention. The system may comprise a number of reader devices 800, 801 and 802. The reader devices may be geographically at the same location or at different locations. As explained in the context of Fig. 7, the reader devices may comprise blocks for determining the advanced functionality 803, advanced functionality program 804, circuitry for advanced functionality 806 and memory 808 for advanced functionality data and passwords. The system may comprise a number of tags 810, 812 and 814. The tags may be capable of similar or different advanced functionality, and may contain similar or different advanced functionality codes AFC and advanced functionality data AFD. The tags may comprise various passwords PW1 and PW2 in addition to or instead of AFC and/or AFD. For example, the tags may contain an access password for preventing unauthorized access to some tag areas, and/or a kill password used for turning the tag inactive. Especially the advanced functionality data may be tag dependent, e.g. tag specific information. The system may also comprise a number of computers and/or servers 820 and 822 for providing a service related to the advanced functionality. The system may also comprise one or more databases for holding data and results related to the advanced functionality. The various elements of the system may be in a communication connection with each other, e.g. through a data network, or peer-to-peer connections from one element to another. The communication connections may be wired or wireless, e.g. an IP-based connection over a fixed network, a wireless local area network or a mobile communication network.

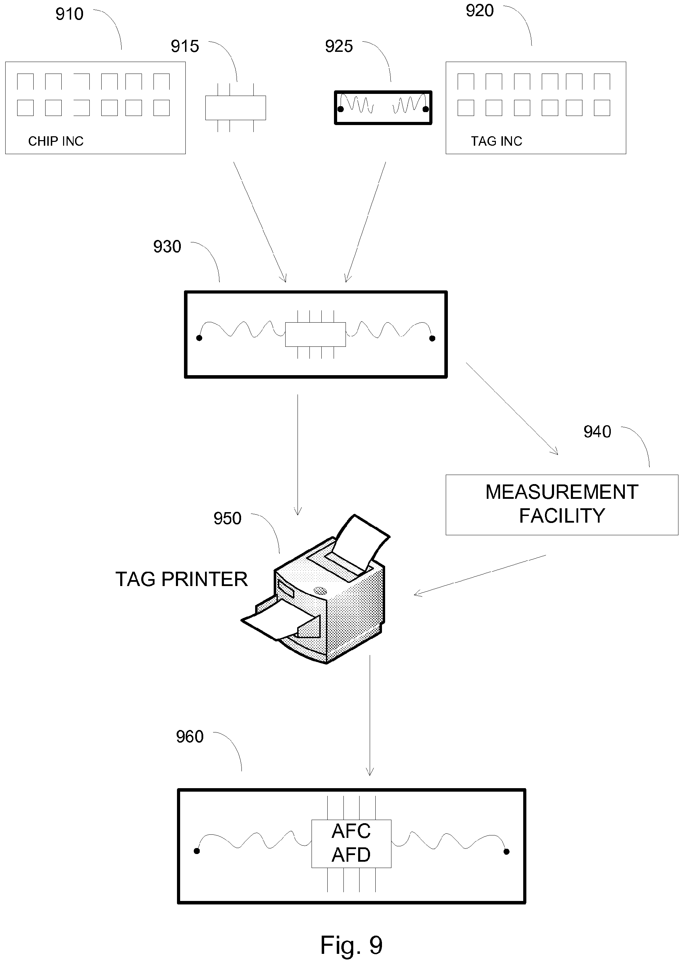

Fig. 9 shows a system for manufacturing tags with application data stored in a password memory. The chips 915 for the tags may be manufactured and/or programmed by one entity 910. The antennas and the protective layers 925 may be manufactured by one or more other entities 920. The different elements making up a tag may be then combined to form a tag 930. At the time of combining or at a different time, the properties tag may be measured at 940, for example to form advanced functionality data AFD to be stored into the tag memory. For example, the tag's temperature measurement capability may be calibrated and the calibration information may be stored into the tag memory. For example, the calibration coefficients may be stored in a kill password area of the tag. This may happen at any phase, e.g. during or after chip manufacturing, during or after combining the tag, or during printing (conversion), or in a completely separate phase. The tag may then be printed 950 at a facility where the tag is taken into use. The advanced functionality code AFC indicating the tag type and allowed operations, as well as the advanced functionality data AFD may be stored to the memory of the tag at this point, or the storing may happen at an earlier phase. The result of this process is a tag 960 with advanced functionality capability indicated by an AFC and supported by advanced functionality data AFD in the memory. The system in Fig. 9 may be implemented in a single facility by a single operator, or the different elements may be carried out at different locations.

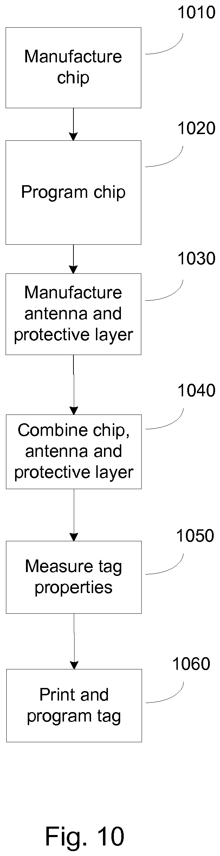

Fig. 10 shows a method for manufacturing tags with application data stored in a password memory. Some of all of the method steps may be carried out by a single entity, or the steps may be carried out by different entities. At phase 1010, the chip for the tag is manufactured so that it can provide an advanced functionality. At phase 1020, the chip is programmed, e.g. to contain program code and data for providing advanced functionality. At this phase, password areas on the chip may also be programmed, e.g. to contain application data such as calibration information. At phase 1030, the antenna and the protective layer are manufactured. At phase 1040, the antenna and the protective layer are combined with the chip to form a tag. At this phase, password areas on the tag may also be programmed, e.g. to contain application data such as calibration information. It is to be noted that for so-called passive tags, there will not be an energy source on the tag, that is, they will be energetically essentially passive. The tags will draw their energy essentially from the read-out signal, as explained earlier. At phase 1050, the properties of the tag may be measured for storing onto the tag or to be kept in a database for later access based on the tag identification. For example, calibration information may be determined and password areas on the chip may be programmed, e.g. to contain application data such as calibration information. At phase 1060, the tag may be printed, that is, the tag may receive information such as an electronic product code. At this phase, password areas on the tag may also be programmed, e.g. to contain application data such as calibration information. At phases 1040, 1050 and 1060, the tag may also receive advanced functionality data and an advanced functionality code. Password fields may be employed in this storing.

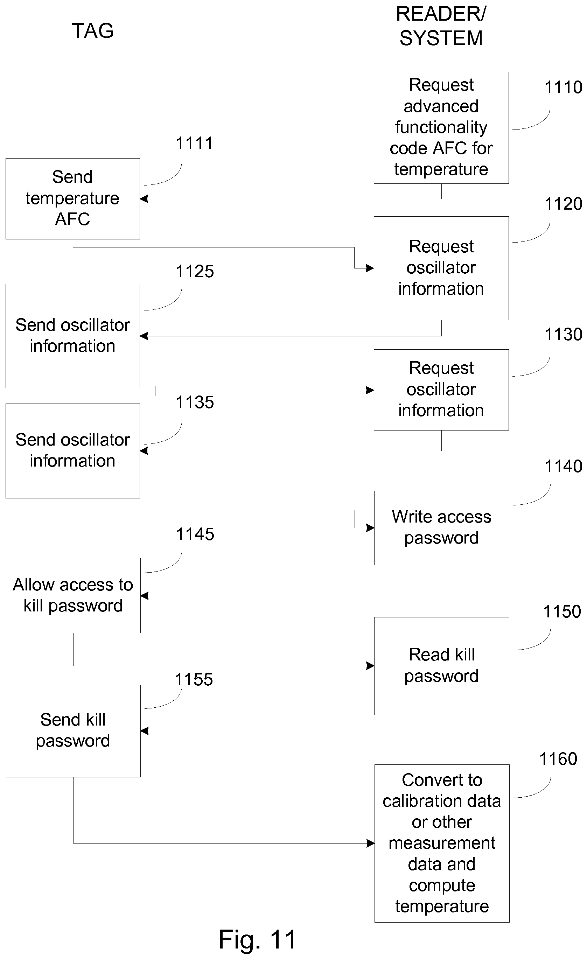

Fig. 11 shows temperature measurement arrangement as an illustration of utilizing memory capabilities of a tag according to embodiments of the invention. At phase 1110, the reader may request the tag to send an advanced functionality code AFC to indicate that the tag is capable of being used in a temperature measurement. In response to this request at phase 1115, or in response to a standard request, the tag may send an advanced functionality code AFC to indicate the type of the tag and the capabilities of the tag. For example, the AFC may indicate how accurate the temperature measurement with this tag may be. As explained earlier, the reader may at phase 1130 then request oscillator information to determine the temperature and the tag may respond at phase 1135 by sending this information. The steps 1130 and 1135 may be repeated as necessary. Using the received information, the reader may alone or with the help of the system determine the tag temperature based on knowledge of the local oscillator properties and the functionality of the tag. The local oscillator frequency changes with temperature, and this affects the oscillator information.

At phase 1140, the reader may then send an access password to the tag to gain access to application data e.g. stored at least partially in another password such as the kill password. The tag may allow access to the requested information at phase 1145. In phase 1150, the reader may then send a read request to the tag to read the password e.g. to read the kill password of a tag. It needs to be noticed here that sending the kill password from the reader to the tag as a parameter or argument in a "kill" command or a "destroy" command would cause the tag to become inactive, but reading the kill password may be safe in this sense (since the "kill" or "destroy" command is not issued). Since access has been granted to read the kill password, the tag may send the kill password to the reader in phase 1160. The (kill) password may contain as such or in encoded form some application data, e.g. calibration data for determining a temperature of the tag. It needs to be understood that some of this information may also reside in the system e.g. in a database as explained earlier. When the reader or the system has received the data contained in the kill password, the received password may be converted to calibration data (e.g. coefficients for converting the oscillator data to a temperature value) in phase 1160. A temperature may then be determined by using the oscillator information and the calibration data, and possibly some other data.

For temperature measurements, calibration data may be stored in the password memory of a remote-access device. Calibration may be done with well known curve fitting algorithms. Typically calibration measurements are performed, and some curve, i.e. function, fitted to the calibration measurement data. For example, a number of pairs (*f'_{osc,i} ; T'ᵢ*) may be measured in the calibration measurements, where *f'_{osc,i}* is the value of the value of the measured quantity in *i*th measurement, and *T'ᵢ* is the reference value of the environment variable in *i*th measurement. It should be emphasized, that *T'i* is the value of the environment variable in the remote-access device, where the measured quantity is measured. For example, *T* may be the temperature of the remote-access device, which in a stationary state equals the ambient temperature. For calibration, a function *g* may be used to interpolate or extrapolate the relation between these values as *f_{osc}(T)=g(T)* and, since one generally wants this function to represent the calibration measurements, it is required that *g(T'ᵢ)*≈*f'_{osc,i}* for all *i*. The function *g(T)* may be a polynomial, or some other suitable function. Typically, a function with only a few parameters is used, such a first degree polynomial, and the parameters are estimated with well known curve fitting techniques. Explicit examples are the first and second degree polynomials: *g(T)=a₁T+a₀* or *g(T)=a₂T²+a₁T+a₀*, where the parameters a are estimated by curve fitting techniques and using the calibration measurement results. In some cases it may be feasible to use the inverse, i.e. use a function *h* such that *T(f_{osc})=h(f_{osc})* and *T'ᵢ*≈*h(f'_{osc,i})* for all *i*. The functional form of *h* can also be a low degree polynomial, e.g. *h(f_{osc})=b₁f_{osc}+b₀* or *h(f_{osc})=b₂f_{osc}²+b₁f_{osc}+b₀.* It is also possible, that all the measured values *(f'_{osc,i} ;T'ᵢ)*, possibly arranged according to increasing *f'_{osc,i}*, form a lookup table that is used as *h.* Furthermore, it is possible, that both the quantities and the environment variables are measured as function of another variable, such as time, i.e. both the pairs *(f'_{osc,i} ;t'ᵢ)* and (*t_{,i} ;T'ᵢ)* are measured, and they are combined to form calibration information only when needed. It is also possible that the pairs *(f'_{osc,i} ;t'ᵢ)* and (*t'_{,i} ;T'ᵢ)* are measured with different devices and stored on different storage devices. It is also possible that all the data triplets *(f'_{osc,i} ;t'ᵢ ;T'ᵢ)* are used for calibration such that only a sufficient amount of most recent measurement values are used for calibration. This might be useful, if the dependence of the quantity on the environment value drifts in time. By these calibration measurements, and possibly using known curve-fitting algorithms, calibration data can be obtained. Calibration data means data that can be used to determine the value of the environmental variable *T* based on the measurement of a quantity *f_{osc}.* It is also noted, that by using higher than 1^{st} degree polynomials g or *h* , the value of the environment variable can be more accurately determined than with a 1^{st} degree polynomial. Moreover, it is noted, that in case higher degree polynomials are used, it is feasible to used the function *h* rather than *g*, since this allows for direct solution of the value of the environment variable. In case a higher degree *g* was used, one would have to solve the roots of the polynomial, and choose the correct one to determine the value.

Calibration can be done either incrementally or in a single run, and also only partial calibration data can be measured. In an incremental calibration, the reader device requests old calibration data and measures the value of the quantity using a remote-access apparatus. The old calibration data can be stored in the remote-access apparatus, the reader, a memory card or in a external server. The reader device then uses this information to generate new, possibly more accurate, calibration data. New data may comprise the measured value and the time or location of measurement, or the new data may comprise the measured value and the corresponding value of the environment variable. Furthermore the new data may comprise, when applicable, any or several of: the identity of the remote-access device, the time, the location, and the value of the environment variable. In order to be stored, the new calibration data is sent. It may be sent to the remote-access apparatus, to another remote-access apparatus, the memory of the reader device, a memory card, or an external server, or to many of the previous. Furthermore, different parts of the new data may be sent to different entities. The existing calibration information may be e.g. all the measured (*f*'*_{osc,i};t'ᵢ ;T'ᵢ)* triplets, and the new calibration information may be this with an added, most recent triplet. Some calibration data may also be removed. It is also possible to weigh the calibration measurements such that the recent calibration measurement results are give more weight than the older results. Thus, in the determination of the value of the environment variable, the most recent known values are given more weight than the older values. Moreover, it is possible to weight the calibration measurement results such that more weight is given to measurements that are done near the probable use conditions. E.g. more weight can be given to measurements near the room temperature than to measurements near the bonding temperature. Apart from calibration measurements, measurements may be formed using only the old calibrations data. In this case the new calibration data is not formed.

When a remote-access apparatus is used to measure the environment, the environment or the value of an environment variable may change as function of time. The variation of the environment temperature of a remote-access apparatus may be due to variable temperature in a fixed location, or due to transportation, where the remote-access apparatus may be exposed to different environments. In many applications, such as logistics, food chain, or construction, the user is often interested, whether the temperature (or the value of another environment variable) is within a predetermined usable range or not, or how often or how long has the remote-access apparatus been in a forbidden environment. Range information of this kind may also be stored in the password memory.

Some examples of such ranges include: (1) a threshold for maximum allowed temperature. This type of threshold is typical in food logistics. The range can be e.g. a few degrees of Celsius for fresh food, or around minus 10 °C for frozen items. (2) a threshold for minimum allowed temperature. This type of threshold is typical also in food logistics, but also in many other liquid transportations. For example, products comprising a lot of water should not be frozen, and therefore a lower threshold of around 0 °C might be applicable. Such a threshold applies also to e.g. vegetables and some other fresh food. (3) a combination of an upper threshold and a lower threshold. For example, some fresh food items should be kept in between around 0 °C and 4 °C. The allowed environment would thus be between 0 °C and 4 °C. (4) another combination of an upper threshold and a lower threshold. For example, some items may be stored in a hot environment or a cold environment, but not in between these temperatures. As an example, some prepared food can be stored in a hot environment, where the temperature is above 60 °C, or in a cold environment, where the temperature is below 6 °C, but not in between these temperatures.

Usability information may also be formed and stored in the password memory. In forming usability information by comparing a state variable with said at least one threshold value, the reader device or another device may compare the state variable such as the measured frequency or the integrated process state to a threshold value. In case a soft threshold is used, the state variable may be updated before the comparison. As discussed above, a calculated frequency value can be used as the state variable, or the calculated frequency value can be used to update the state variable. The calculated frequency may give penalty for the item's state in case measurements have not been done according to a measurement schedule. The comparison may be done by the reader device. Based on this comparison the reader device may generate usability information. The usability information is preferably written to the remote-access apparatus. The usability information can be stored also elsewhere, such as the reader device, a detachable memory card or an information server. Usability information may be one bit indicating that the item is either usable or not. Usability information may also comprise another bit of information indicating whether the item was determined non-satisfactory on the basis of a penalty scheme or on the basis of a measurement. Usability information may also comprise a third bit of information indicating whether a penalty scheme was applied to the item's state during the item's life or not. Moreover, usability information may comprise a fourth bit of information indicating whether the operator responsible for a fault is the one making the measurement or a previous operator.

In determining the usability of an item by using usability information, a device will determine the usability of an item based on usability information. The device may be an RFID reader device or another device, such as a computer. The usability information may be formed in the device or elsewhere. As an example, the state variable may be sent from a reader device the device to another device, and the another device may generate usability information by comparing the state variable with a threshold value. Here the state variable may mean the value of the measurable quantity or the state variable obtained by integration of a rate. In addition, an RFID reader may read the usability information from a remote access apparatus and send this information to the another device. The another device may then determine the usability based on this information. Usability information may also be stored on a reader device. Moreover, the threshold values or usability information be stored in one or some of the remote-access apparatus, another remote-access apparatus, the reader device, the another device, a memory card, or an external database.

What has been described above in the various embodiments regarding RFID tags is often implemented by a chip on the RFID tag. Therefore, one target of the invention is an RFID chip providing advanced functionality or capability to store application data into a password by RFID tags. The invention may be applicable to other devices than RFID tags and transponders, e.g. the invention may be applied in a portable computing device or any other computer, in vehicles, data processing systems and other entities of varying physical size.

In the above, an energetically essentially passive transponder or a remote-access apparatus or a tag may be understood to operate so that it draws its operating energy essentially from the reader's electromagnetic field. A reader device may be understood to be any device capable of making the tag operate and communicate according to an expected e.g. standardized process, e.g. by replying to a query with a back-scattering modulation of the reader field. In case of a temperature measurement, the measurement unit may be understood to essentially draw its energy from the reader field, and the determination of temperature data may happen using a temperature-dependent element such as an oscillator, a resistor, or another means for determining temperature data.

The present application has been filed together with the applications titled "A method for measuring environment using a calibration database", "A method for determining an environment dependent usability of an item", "Temperature monitoring system", "Temperature managed chain", all on the same date, and by the same applicant. For the purposes of forming and using calibration data related to temperature determination, the application "A method for measuring environment using a calibration database" is referred to. For the purposes of determining usability of an item, using thresholds and ranges for the same, and for statistical determination of usability, the application "A method for determining an environment dependent usability of an item" is referred to. For the purposes of determining temperature information in various systems, the application "Temperature monitoring system" is referred to. For the purposes of monitoring temperature of in a temperature-managed chain, the application "Temperature managed chain" is referred to.

The various embodiments of the invention can be implemented with the help of computer program code that resides in a memory and causes the relevant apparatuses to carry out the invention. For example, a tag, a chip or a reader device may comprise circuitry and electronics for handling, receiving and transmitting data, computer program code in a memory, and a processor that, when running the computer program code, causes the reader device to carry out the features of an embodiment. Alternatively or in addition, a tag or a chip for a tag or a reader device may comprise logic circuitry for implementing the same functionality as may be carried out by means of program code run on a processor. Yet further, a network device may comprise circuitry and electronics for handling, receiving and transmitting data, computer program code in a memory, and a processor that, when running the computer program code, causes the network device to carry out the features of an embodiment. A system may comprise any number of tags of the same kind or different kinds, and reader devices and network computers in any combination.

It is clear that the present invention is not limited solely to the above-presented embodiments, but it can be modified within the scope of the appended claims.

## Claims

1. A method for providing application data on a remote-access device (100, 400, 470, 700, 810, 812, 814, 930, 960), said remote-access device being energetically essentially passive, the method comprising:
- forming (350) application data into a bit string for storing into a password memory space of said remote-access device, wherein said application data is numbers, text, logical data, structured data, temperature calibration data, or temperature history data, said password memory space being a memory space reserved for a password,
- obtaining write access (360) to a password memory space of said remote-access device, and
- writing (370) said formed bit string into said password memory space.

2. A method according to claim 1, further comprising using an access password to obtain access to said password memory space.

3. A method according to claim 1 or 2, wherein said password memory space is a password memory space reserved for an inactivating password for said remote-access device such as a kill password.

4. A method according to claim 1, 2 or 3, further comprising:
- forming an address or a pointer into said bit string, wherein said address or pointer is indicative of a physical or virtual location where a part or a whole of said application data resides.

5. A method according to any of the claims 1 to 4, further comprising:
- accessing (610) said password memory space
- obtaining said bit string from said password memory space (620),
- deriving (630, 650, 660) application data from said obtained bit string, and
- providing (670) said application data derived from said obtained bit string to be accessible to an application.

6. A method according to any of the claims 1 to 5, further comprising
- deriving advanced functionality data from said obtained bit string, and
- using advanced functionality of said remote-access device by utilizing said advanced functionality data.

7. A method according to any of the claims 1 to 6, further comprising
- deriving an address from said obtained bit string,
- obtaining advanced functionality data using said derived address, and
- using advanced functionality of said remote-access device by utilizing said advanced functionality data.

8. A method according to claim 6 or 7, wherein said advanced functionality is temperature measurement and said advanced functionnality data is calibration information for said temperature measurement.

9. A remote-access device (100, 400, 470, 700, 810, 812, 814, 930, 960), said remote-access device being energetically essentially passive, comprising an antenna (140), circuitry (110) for processing information and password memory space (570, 740, 808), the password memory space (570, 740, 808) being a memory space reserved for a password, the password memory having been written with a bit string indicative of application data, wherein said application data is numbers, text, logical data, structured data, temperature calibration data, or temperature history data.

10. A remote-access device according to claim 9, wherein said device is arranged to provide access to said password memory space (570, 740, 808) when receiving an access password, and said password memory space (570, 740, 808) is reserved for an inactivation password such as a kill password for inactivating said device.

11. A remote-access device according to claim 9 or 10 comprising an address or a pointer in said password memory, wherein said address or pointer is indicative of a physical or virtual location where a part or a whole of said application data resides.

12. A remote-access device according to claim 9, 10 or 11, wherein said application data comprises calibration information for temperature measurement.

13. A reader device (150, 800, 801, 802) for reading remote-access devices, said remote-access devices being energetically essentially passive, said reader device comprising a processor and a memory comprising computer program code, said computer program code containing instructions that, when run on the processor, cause the reader device to:
- access a password memory space of a remote-access device, said password memory space being a memory space reserved for a password,
- obtain a bit string from said password memory space,
- derive application data from said obtained bit string, and
- provide said application data derived from said obtained bit string to be accessible to an application,
wherein said application data is numbers, text, logical data, structured data, temperature calibration data, or temperature history data.

14. A reader device according to claim 13, further comprising computer program code to cause the reader device to:
- form application data into said bit string for storing into said password memory space (570, 740, 808) of said remote-access device,
- obtain write access to said password memory space (570, 740, 808) of said remote-access device, and
- write said application data bit string into said password memory space.

15. A reader device according to claim 13 or 14, wherein said device is arranged to request access to said password memory by sending an access password, wherein said password memory is reserved for an inactivation password such as a kill password for inactivating said device.

16. A reader device according to claim 13, 14 or 15, further comprising computer program code containing instructions that, when run on the processor, cause the reader device to:
- derive an address from said obtained first password,
- obtain advanced functionality data using said derived address, and
- use advanced functionality of said remote-access device by utilizing said advanced functionality data.

17. A reader device according to any of the claims 13 to 16, wherein the data indicative of application data is related to a temperature measurement, or temperature history data of the remote-access device.

18. A system comprising one or more remote-access devices according to any of the claims 9 to 12, one or more reader devices according to any of the claims 13 to 17, and one or more servers for storing application data, the system being configured to:
- access a password memory space of said one or more remote-access devices, said password memory space being a memory space reserved for a password,
- obtain at least one first password from said memory space,
- derive at least one address from said obtained at least one first password,
- obtain advanced functionality data from said one or more servers using said at least one derived address, and
- use advanced functionality of said one or more remote-access devices by utilizing said advanced functionality data.

## Patentansprüche

1. Verfahren zum Bereitstellen von Anwendungsdaten in einer Vorrichtung mit Fernzugriff (100, 400, 470, 700, 810, 812, 814, 930, 960), wobei die Vorrichtung mit Fernzugriff energetisch im Wesentlichen passiv ist, wobei das Verfahren umfasst:
- Bilden (350) von Anwendungsdaten in eine Bitkette zum Speichern in einen Passwortspeicherplatz der Vorrichtung mit Fernzugriff, wobei die Anwendungsdaten Zahlen, Text, logische Daten, strukturierte Daten, Temperaturkalibrierungsdaten oder Temperaturverlaufsdaten sind, wobei der Passwortspeicherplatz ein Speicherplatz ist, der für ein Passwort reserviert ist,
- Erhalten eines Schreibzugriffs (360) auf einen Passwortspeicherplatz der Vorrichtung mit Fernzugriff, und
- Schreiben (370) der gebildeten Bitkette in den Passwortspeicherplatz.

2. Verfahren gemäß Anspruch 1, ferner umfassend das Verwenden eines Zugriffpassworts zum Erhalten eines Zugriffs auf den Passwortspeicherplatz.

3. Verfahren gemäß Anspruch 1 oder 2, wobei der Passwortspeicherplatz ein Passwortspeicherplatz ist, der für ein deaktivierendes Passwort für die Vorrichtung mit Fernzugriff, wie etwa ein Kill Password, reserviert ist.

4. Verfahren nach Anspruch 1, 2 oder 3, ferner umfassend:
- Bilden einer Adresse oder eines Zeigers in die Bitkette, wobei die Adresse oder der Zeiger eine physikalische oder virtuelle Stelle bezeichnet, an der ein Teil der oder die gesamten Anwendungsdaten liegen.

5. Verfahren gemäß einem der Ansprüche 1 bis 4, ferner umfassend:
- Zugreifen (610) auf den Passwortspeicherplatz,
- Erhalten der Bitkette aus dem Passwortspeicherplatz (620),
- Herleiten (630, 650, 660) von Anwendungsdaten aus der erhaltenen Bitkette, und
- Bereitstellen (670) der Anwendungsdaten, die von der erhaltenen Bitkette hergeleitet wurden, um auf eine Anwendung zugreifen zu können.

6. Verfahren gemäß einem der Ansprüche 1 bis 5, ferner umfassend:
- Herleiten von Daten zu einer erweiterten Funktionalität von der erhaltenen Bitkette, und
- Verwenden der erweiterten Funktionalität der Vorrichtung mit Fernzugriff durch Nutzen der Daten zu einer erweiterten Funktionalität.

7. Verfahren gemäß einem der Ansprüche 1 bis 6, ferner umfassend:
- Herleiten einer Adresse von der erhaltenen Bitkette,
- Erhalten von Daten zu einer erweiterten Funktionalität unter Verwendung der hergeleiteten Adresse, und
- Verwenden der erweiterten Funktionalität der Vorrichtung mit Fernzugriff durch Nutzen der Daten zu einer erweiterten Funktionalität.

8. Verfahren gemäß Anspruch 6 oder 7, wobei die erweiterte Funktionalität eine Temperaturmessung ist und die Daten zu einer erweiterten Funktionalität Kalibrierungsinformationen für die Temperaturmessung sind.

9. Vorrichtung mit Fernzugriff (100, 400, 470, 700, 810, 812, 814, 930, 960), wobei die Vorrichtung mit Fernzugriff energetisch im Wesentlichen passiv ist, umfassend eine Antenne (140), Schaltungen (110) zur Verarbeitung von Informationen und einen Passwortspeicherplatz (570, 740, 808), wobei der Passwortspeicherplatz (570, 740, 808) ein Speicherplatz ist, der für ein Passwort reserviert ist, wobei der Passwortspeicher mit einer Bitkette, die Anwendungsdaten bezeichnen, geschrieben worden ist, wobei die Anwendungsdaten Zahlen, Text, logische Daten, strukturierte Daten, Temperaturkalibrierungsdaten oder Temperaturverlaufsdaten sind.

10. Vorrichtung mit Fernzugriff gemäß Anspruch 9, wobei die Vorrichtung dafür angeordnet ist, beim Empfangen eines Zugriffpassworts einen Zugriff auf den Passwortspeicherplatz (570, 740, 808) bereitzustellen und der Passwortspeicherplatz (570, 740, 808) für ein Deaktivierungspasswort reserviert ist, wie etwa ein Kill Password zum Deaktivieren der Vorrichtung.

11. Vorrichtung mit Fernzugriff gemäß Anspruch 9 oder 10, umfassend eine Adresse oder einen Zeiger in dem Passwortspeicher, wobei die Adresse oder der Zeiger eine physikalische oder virtuelle Stelle bezeichnet, an der ein Teil der oder die gesamten Anwendungsdaten liegen.

12. Vorrichtung mit Fernzugriff gemäß Anspruch 9, 10 oder 11, wobei die Anwendungsdaten Kalibrierungsinformationen zur Temperaturmessung umfassen.

13. Lesegerätvorrichtung (150, 800, 801, 802) zum Lesen von Vorrichtungen mit Fernzugriff, wobei die Vorrichtungen mit Fernzugriff energetisch im Wesentlichen passiv sind, wobei die Lesegerätvorrichtung einen Prozessor und einen einen Computerprogrammcode umfassenden Speicher umfasst, wobei der Computerprogrammcode Befehle enthält, die, wenn sie auf dem Prozessor ablaufen, die Lesegerätvorrichtung dazu veranlassen:
- auf einen Passwortspeicherplatz einer Vorrichtung mit Fernzugriff zuzugreifen, wobei der Passwortspeicherplatz ein Speicherplatz ist, der für ein Passwort reserviert ist,
- eine Bitkette von dem Passwortspeicherplatz zu erhalten,
- Anwendungsdaten von der erhaltenen Bitkette herzuleiten, und
- die Anwendungsdaten, die von der erhaltenen Bitkette hergeleitet wurden, bereitzustellen, um auf eine Anwendung zugreifen zu können, wobei die Anwendungsdaten Zahlen, Text, logische Daten, strukturierte Daten, Temperaturkalibrierungsdaten oder Temperaturverlaufsdaten sind.

14. Lesegerätvorrichtung gemäß Anspruch 13, ferner umfassend einen Computerprogrammcode, um die Lesegerätvorrichtung dazu zu veranlassen:
- Anwendungsdaten in die Bitkette zu bilden, um sie in den Passwortspeicherplatz (570, 740, 808) der Vorrichtung mit Fernzugriff zu speichern,
- einen Schreibzugriff auf den Passwortspeicherplatz (570, 740, 808) der Vorrichtung mit Fernzugriff zu erhalten, und
- die Anwendungsdaten-Bitkette in den Passwortspeicherplatz zu schreiben.

15. Lesegerätvorrichtung gemäß Anspruch 13 oder 14, wobei die Vorrichtung dafür angeordnet ist, durch Senden eines Zugriffspassworts einen Zugriff auf den Passwortspeicher anzufordern, wobei der Passwortspeicher für ein Deaktivierungspasswort, wie etwa ein Kill Password zum Deaktivieren der Vorrichtung, reserviert ist.

16. Lesegerätvorrichtung gemäß Anspruch 13, 14 oder 15, ferner umfassend einen Computerprogrammcode, der Befehle enthält, die, wenn sie auf dem Prozessor ablaufen, die Lesegerätvorrichtung dazu veranlassen:
- eine Adresse von dem erhaltenen ersten Passwort herzuleiten,
- unter Verwendung der hergeleiteten Adresse Daten zu einer erweiterten Funktionalität zu erhalten, und
- die erweiterte Funktionalität der Vorrichtung mit Fernzugriff durch Nutzen der Daten zu einer erweiterten Funktionalität zu verwenden.

17. Lesegerätvorrichtung gemäß einem der Ansprüche 13 bis 16, wobei die Daten, die Anwendungsdaten bezeichnen, eine Temperaturmessung oder Temperaturverlaufsdaten der Vorrichtung mit Fernzugriff betreffen.

18. System, umfassend eine oder mehrere Vorrichtungen mit Fernzugriff gemäß einem der Ansprüche 9 bis 12, eine oder mehrere Lesegerätvorrichtungen gemäß einem der Ansprüche 13 bis 17 und einen oder mehrere Server zum Speichern von Anwendungsdaten, wobei das System dafür ausgelegt ist:
- auf einen Passwortspeicherplatz der einen oder mehreren Vorrichtungen mit Fernzugriff zuzugreifen, wobei der Passwortspeicherplatz ein Speicherplatz ist, der für ein Passwort reserviert ist,
- mindestens ein erstes Passwort von dem Speicherplatz zu erhalten,
- mindestens eine Adresse von dem erhaltenen mindestens einen ersten Passwort herzuleiten,
- unter Verwendung der mindestens einen hergeleiteten Adresse Daten zu einer erweiterten Funktionalität von dem einen oder den mehreren Servern zu erhalten, und
- durch Nutzen der Daten zu einer erweiterten Funktionalität die erweiterte Funktionalität der einen oder mehreren Vorrichtungen mit Fernzugriff zu verwenden.

## Revendications

1. Procédé de fourniture de données d'application sur Dispositif d'accès à distance (100, 400, 470, 700, 810, 812, 814, 930, 960), ledit dispositif d'accès à distance étant essentiellement passif d'un point de vue énergétique, le procédé comprenant :
- la formation (350) de données d'application en une chaîne de bits destinée à la conservation en mémoire dans un espace mémoire de mots de passe dudit dispositif d'accès à distance, lesdites données d'application étant des nombres, du texte, des données logiques, des données structurées, des données de calibrage de température ou des données d'historique de température, ledit espace mémoire de mots de passe étant un espace mémoire réservé à un mot de passe,
- l'obtention d'un accès en écriture (360) à un espace mémoire de mots de passe dudit dispositif d'accès à distance, et
- l'écriture (370) de ladite chaîne de bits formée dans ledit espace mémoire de mots de passe.

2. Procédé selon la revendication 1, comprenant en outre l'utilisation d'un mot de passe d'accès de façon à obtenir un accès audit espace mémoire de mots de passe.

3. Procédé selon la revendication 1 ou 2, dans lequel ledit espace mémoire de mots de passe est un espace mémoire de mots de passe réservé à un mot de passe d'inactivation destiné audit dispositif d'accès à distance tel qu'un mot de passe de suppression.

4. Procédé selon la revendication 1, 2 ou 3, comprenant en outre :
- la formation d'une adresse ou d'un pointeur vers ladite chaîne de bits, ladite adresse ou ledit pointeur étant indicatif d'un emplacement physique ou virtuel dans lequel une partie ou la totalité desdites données d'application réside.

5. Procédé selon l'une quelconque des revendications 1 à 4, comprenant en outre :
- l'accès (610) audit espace mémoire de mots de passe
- l'obtention de ladite chaîne de bits à partir dudit espace mémoire de mots de passe (620),
- la dérivation (630, 650, 660) de données d'application à partir de ladite chaîne de bits obtenue, et
- la fourniture (670) desdites données d'application dérivées de ladite chaîne de bits obtenue de façon à être accessibles à une application.

6. Procédé selon l'une quelconque des revendications 1 à 5, comprenant en outre
- la dérivation de données de fonctionnalité avancée à partir de ladite chaîne de bits obtenue, et
- l'utilisation de la fonctionnalité avancée dudit dispositif d'accès à distance par l'utilisation desdites données de fonctionnalité avancée.

7. Procédé selon l'une quelconque des revendications 1 à 6, comprenant en outre
- la dérivation d'une adresse à partir de ladite chaîne de bits obtenue,
- l'obtention de données de fonctionnalité avancée au moyen de ladite adresse dérivée, et
- l'utilisation de la fonctionnalité avancée dudit dispositif d'accès à distance par l'utilisation desdites données de fonctionnalité avancée.

8. Procédé selon la revendication 6 ou 7, dans lequel ladite fonctionnalité avancée est une mesure de température et lesdites données de fonctionnalité avancée sont des informations de calibrage destinées à ladite mesure de température.

9. Dispositif d'accès à distance (100, 400, 470, 700, 810, 812, 814, 930, 960), ledit dispositif d'accès à distance étant essentiellement passif d'un point de vue énergétique, comprenant une antenne (140), un ensemble de circuits (110) destiné au traitement d'informations et d'un espace mémoire de mots de passe (570, 740, 808), l'espace mémoire de mots de passe (570, 740, 808) étant un espace mémoire réservé à un mot de passe, la mémoire de mots de passe ayant été écrite avec une chaîne de bits indicative de données d'application, lesdites données d'application étant des nombres, du texte, des données logiques, des données structurées, des données de calibrage de température ou des données d'historique de température.

10. Dispositif d'accès à distance selon la revendication 9, dans lequel ledit dispositif est agencé de façon à fournir un accès audit espace mémoire de mots de passe (570, 740, 808) lors de la réception d'un mot de passe d'accès, et ledit espace mémoire de mots de passe (570, 740, 808) est réservé à un mot de passe d'inactivation tel qu'un mot de passe de suppression destiné à l'inactivation dudit dispositif.

11. Dispositif d'accès à distance selon la revendication 9 ou 10 comprenant une adresse ou un pointeur vers ladite mémoire de mots de passe, ladite adresse ou ledit pointeur étant indicatif d'un emplacement physique ou virtuel dans lequel une partie ou la totalité desdites données d'application réside.

12. Dispositif d'accès à distance selon la revendication 9, 10 ou 11, dans lequel lesdites données d'application comprennent des informations de calibrage destinées à une mesure de température.

13. Dispositif lecteur (150, 800, 801, 802) destiné à la lecture de dispositifs d'accès à distance, lesdits dispositifs d'accès à distance étant essentiellement passifs d'un point de vue énergétique, ledit dispositif lecteur comprenant un processeur et une mémoire comprenant du code de programme informatique, ledit code de programme informatique contenant des instructions qui, lorsqu'elles sont exécutées sur le processeur, amènent le dispositif lecteur à :
- accéder à un espace mémoire de mots de passe d'Dispositif d'accès à distance, ledit espace mémoire de mots de passe étant un espace mémoire réservé à un mot de passe,
- obtenir une chaîne de bits à partir dudit espace mémoire de mots de passe,
- dériver des données d'application à partir de ladite chaîne de bits obtenue, et
- fournir lesdites données d'application dérivées de ladite chaîne de bits obtenue de façon à être accessibles à une application, lesdites données d'application étant des nombres, du texte, des données logiques, des données structurées, des données de calibrage de température ou des données d'historique de température.

14. Dispositif lecteur selon la revendication 13, comprenant en outre du code de programme informatique destiné à amener le dispositif lecteur à :
- former des données d'application vers ladite chaîne de bits destinées à la conservation en mémoire dans ledit espace mémoire de mots de passe (570, 740, 808) dudit dispositif d'accès à distance,
- obtenir un accès en écriture audit espace mémoire de mots de passe (570, 740, 808) dudit dispositif d'accès à distance, et
- écrire lesdites données d'application chaîne de bits dans ledit espace mémoire de mots de passe.

15. Dispositif lecteur selon la revendication 13 ou 14, dans lequel ledit dispositif est agencé de façon à demander un accès à ladite mémoire de mots de passe par l'envoi d'un mot de passe d'accès, ladite mémoire de mots de passe étant réservée à un mot de passe d'inactivation tel qu'un mot de passe de suppression destiné à l'inactivation dudit dispositif.

16. Dispositif lecteur selon la revendication 13, 14 ou 15, comprenant en outre du code de programme informatique contenant des instructions qui, lorsqu'elles sont exécutées sur le processeur, amènent le dispositif lecteur à :
- dériver une adresse à partir dudit premier mot de passe obtenu,
- obtenir des données de fonctionnalité avancée au moyen de ladite adresse dérivée, et
- utiliser la fonctionnalité avancée dudit dispositif d'accès à distance par l'utilisation desdites données de fonctionnalité avancée.

17. Dispositif lecteur selon l'une quelconque des revendications 13 à 16, dans lequel les données indicatives de données d'application portent sur une mesure de température ou sur des données d'historique de température du dispositif d'accès à distance.

18. Système comprenant un ou plusieurs dispositifs d'accès à distance selon l'une quelconque des revendications 9 à 12, un ou plusieurs dispositif lecteurs selon l'une quelconque des revendications 13 à 17 et un ou plusieurs serveurs destinés à la conservation en mémoire de données d'application, le système étant configuré de façon à :
- accéder à un espace mémoire de mots de passe desdits un ou plusieurs dispositifs d'accès à distance, ledit espace mémoire de mots de passe étant un espace mémoire réservé à un mot de passe,
- obtenir au moins un premier mot de passe à partir dudit espace mémoire,
- dériver au moins une adresse à partir dudit au moins un premier mot de passe obtenu,
- obtenir des données de fonctionnalité avancée à partir desdits un ou plusieurs serveurs au moyen de ladite au moins une adresse dérivée, et
- utiliser la fonctionnalité avancée desdits un ou plusieurs dispositifs d'accès à distance par l'utilisation desdites données de fonctionnalité avancée.
